# EUROPEAN PATENT APPLICATION

(11) **EP 3 450 195 A2**
(43) Date of publication of application: **06.03.2019**
(21) Application number: 18275136.2
(22) Date of filing: 03.09.2018
(51) Int. Cl.: B41M 7/00, B41M 5/00

(54) **METHODS FOR DIGITAL PRINTING ON PRODUCTS MADE FROM PAPER, POLYETHYLENE OR OTHER MATERIALS**

(30) Priority: 03.09.2017 US 201762553894 P
(71) Applicant: Kohn, Steve, Short Hills, NJ 07078 (US); DeOliveira, Luis, Lanoka Harbor, NJ 08734 (US)
(72) Inventor: Kohn, Steve, Short Hills, NJ 07078 (US); DeOliveira, Luis, Lanoka Harbor, NJ 08734 (US)
(74) Representative: Davies, Gregory Mark

(57) **Abstract**

A method for digital printing of single or multiple color graphics and/or text on flexible and semi-rigid packaging materials comprising: digitally pre-printing on a sheet or roll of paper, polyethylene or other material (60), or digitally post printing on a bag (20), pouch, or sheet of material by depositing a thin layer of ink or toner onto a packaging material surface to form an image, and then adhering the ink or toner to the packaging material surface by use of a fuser fluid, heat, UV curing process, or any combination (10).

## Description

### Field of the Invention

The present invention relates to methods for printing from a digital-based image directly onto products made from paper, polyethylene, or other materials.

### Background of the Invention

Printed and unprinted flexible and semi-rigid packaging materials are commonly used for packing retail, industrial, and commercial products into plastic bags, paper bags, sacks, pouches, wrappers, and the like. Printed and unprinted flexible and semi-rigid packaging materials are also commonly used for covering or storing retail, industrial, and commercial products. Desired features of packaging materials include printability and different levels of opacity. Packaging materials can either be printed or unprinted. Printed packaging materials can use a single color or multiple colors. Graphics printed on the packaging materials can include company logos, association logos, advertising and text. Graphics can be used to communicate promotional or educational messages.

Offset printing is a commonly used printing technique for printing images, graphics and/or text on printed surfaces such as paper bags. Offset printing occurs when an inked area is transferred from a metal or rubber plate to a rubber cylinder (commonly called a "blanket"), and then transferred to a printing surface such as paper. The process is called "offset" because the inked image is offset or transferred to something else first (e.g. the rubber blanket) before being transferred directly to the printed surface.

Offset commercial printing presses and inkjet desktop printers both use some combination of the following ink colors: cyan ("C"), magenta ("M"), yellow ("Y"), and black ("K"). Offset printing is also typically referred to as 4-color printing or 4-color process lithography.

With offset printing, separate plates are created for each color. The plates are then put onto a press. The press pulls in the ink from ink reservoirs and puts the ink onto the plate. The press then applies pressure to the plate and the ink imprints the image from the plate onto a rubber blanket. The image is then pressed onto the paper off the blanket to make a print. Often, the ink also permeates the substrate being printed on, resulting in "bleed through" and an unacceptable end product. Offset printing occurs very rapidly and is best suited for long runs over a long period of time and for producing many items with the same printed image.

Digital printing refers to methods of printing from a digital-based image onto a surface or substrate, without requiring the need for separate, analog plates. Unlike conventional ink used in offset printing, the ink or toner used in digital printing does not permeate the substrate, but forms a thin layer on the surface. Digital printing allows for on demand printing, short turnaround time, and simple modifications of the image used for each impression (variable image printing).

U.S. Patent No. 5,795,280 relates to an apparatus for facilitating the registration of printed matter during the manufacture of bags on fixed-size bag formation equipment, from a continuous web of a substantially non-stretchable material. Printed matter, printed upon the continuous web at regularly-spaced intervals, includes a plurality of periodically spaced reference markers.

U.S. Patent No. 8,840,240 relates to a paper conveyance device for a printing device that includes a detector and conveyance mechanisms. The device includes a print head and feed and pressure rollers.

U.S. Patent No. 8,857,978 relates to a paper conveyance device for a printing device that print information using a printhead on conveyed continuous paper including a paper conveyance mechanism that holds and conveys the continuous paper to the print area of the printhead, and a guide unit that has two guide surfaces facing the conveyed continuous paper.

U.S. Patent No. 8,899,740 relates to a print medium conveyance device having a tractor, conveyance roller, and clutch mechanism. The tractor engages engagement holes formed in a line in the medium and conveys the print medium in a specific direction. The print medium can be conveyed with high precision.

U.S. patent publication no. 20030173716 relates to a colored polyolefin film printed by digital printing. The colored polyolefin film is formed by blending a coloring agent with a polyolefin, and forming a film from the blend by an extrusion process. Digital signals are supplied to a printer adapted to respond to such signals to print the colored film. Indicia may be placed on the surface of the colored film by electrostatic printing, thermal transfer printing or ink jet printing, especially with UV curable ink jet ink. The colored polyolefin film may be a multi-layer film having an opaque, cavitated core layer and at least one colored skin or tie layer.

U.S. patent publication no. 20050115200 relates to a package paper thermal printer of a tablet packing machine for printing information about prescription medicines on package paper by a thermal printhead and a ribbon tape. The thermal print head and ribbon tape are raised together so as to closely attach the ribbon tape to a lower surface of the package paper passing under the contact roller, so that information inputted into the thermal print head is transferred to the package paper by heat and characters are printed on the package paper when the actuating plate is raised.

U.S. patent publication no. 20020191036 relates to an ink jet printer for digital textile printing which uses a flat table instead of a conventional roll. An ink jet printer has a transporter part to transport an object to be printed through a path and printing part to perform the digital printing by jetting ink drops to the object. The transporting part comprises a transporting table on which the object is fixed and transported, a transporting means for transporting the table to the printing part, and a driving means for operating the transporting means.

U.S. patent publication no. 20080118746 relates to a low-cost method of coating low density polyethylene, linear low density polyethylene or combinations. The method includes treating the polyethylene with a coating and then digitally printing the coated polyethylene substrate. The coated substrate may then be overcoated to protect the printing and the substrate may then be formed. The substrate may form a small tote bag.

U.S. patent publication no. 20130324386 relates to a bag making machine with a feeder to unwind and feed a sheet in a first direction, a forming device to bend and fold the sheet to form a tubular body, a speed controller for controlling upstream and downstream speeds of advancement of the tubular body, a cutter to cut the tubular body into a plurality of tubular pieces, a direction changing device to change direction of advancement of the tubular pieces, a sewing device to close bottom side of each tubular piece and sealing device. A printing device includes a printer near the feeder to print a pattern on the surface of the fabric sheet.

U.S. patent publication no. 2011/0079531 relates to a packaging film with at least one section comprising a single or multi-layered substrate, a printed functional layer formed from a printable material forming at least in sections an outer layer of the packaging film section. The invention concerns a packaging and a packaging product unit.

U.S. patent publication no. 2015/0199786 relates to a bag that includes a flexible web in the shape of a bag and a communication member or other advertising media attached to the flexible web with an adhesive. An advertising medium includes a packaging material made of a first material and a communication member applied to the packaging material.

### Summary of the Invention

The present invention relates to a method for digital printing of graphics and/or text on flexible and semi-rigid packaging materials. It is an object of the present invention for the packaging materials to comprise paper products such as bags, corrugate, and cardboard and cartons. It is an object of the present invention for the packaging materials to comprise polyethylene products such as t-sacks, sheeting, tubing, covers such as furniture covers and dust covers, and storage bags such as mattress bags and food pouches. It is an object of the present invention for the packaging materials to be made from paper, polyethylene or other packaging material.

The present invention relates to a method of digital printing of graphics and/or text on pinch bottom bags and flat bottom bags. A pinch bottom bag comprises a tubular envelope closed at one end by a single glued flap. A flat bottom bag comprises a tubular envelope closed at one end by glued flaps that form a flat bottom. It is an object of the present invention for a pinch bottom bag or flat bottom bag to be made from a flexible material such as paper or polyethylene.

It is an object of the present invention to digitally print single or multiple color graphics and text on flexible and semi-rigid packaging materials. It is an object of the present invention to digitally print single or multiple color graphics or text on flexible and semi-rigid packaging materials. It is an object of the present invention that the packaging materials comprise paper, polyethylene or other packaging material.

It is an object of the present invention to digitally print single or multiple color graphics and text on flexible and semi-rigid packaging materials before converting the materials into finished products (pre-printing). It is an object of the present invention to digitally print single or multiple color graphics and text on flexible and semi-rigid packaging materials after converting the materials into finished products (post-printing).

It is an object of the present invention to digitally print single or multiple color graphics or text on flexible and semi-rigid packaging materials before converting the materials into finished products (pre-printing). It is an object of the present invention to digitally print single or multiple color graphics or text on flexible and semi-rigid packaging materials after converting the materials into finished products (post-printing).

It is an object of the present invention to digitally print on flexible and semi-rigid paper packaging material such as rolls of bags, bags, sheets of corrugate, corrugate, sheets of cardboard, cardboard and cartons.

The present invention relates to a method that comprises using a digital printing system, separate from the bag machine, to pre-print single or multiple color graphics and/or text on rolls of paper used to make paper bags. It is an object of the present invention for the method to comprise using a digital printing system, separate from the bag machine, to pre-print on rolls of paper prior to the paper being fed to a bag machine for producing pinch bottom bags. It is an object of the present invention for the method to comprise using a digital printing system, separate from the bag machine, to pre-print on rolls of paper prior to the paper being fed to a bag machine for producing flat bottom bags. It is an object of the present invention for the method to comprise a digital printing system depositing ink or toner onto the surface of the paper to form an image (pre-printing) before converting the paper to bags. It is an object of the present invention for the ink or toner to form a thin layer on the surface of the paper. It is an object of the present invention for the ink or toner to be adhered to the bag by using a fuser fluid. It is an object of the present invention for the ink or toner to be adhered to the bag by using heat. It is an object of the present invention for the ink or toner to be adhered to the bag by using UV curing. It is an object of the present invention for the ink or toner to be adhered to the bag by using some combination of fuser fluid, heat or UV curing. It is an object of the present invention for the digital printing system to print continuously on the paper as it is unrolled and fed to a bag machine. It is an object of the present invention for the digital printing system to print repeated images of the graphics and/or text on the paper. It is an object of the present invention for the digital printing system to print graphics and/or text on the paper so that when the bag material is formed into bags, the image or text is in the same location on every bag produced. It is an object of the present invention for the digital printing system to print graphics and/or text on the paper so that the image or text is in a different location on different bags produced.

The present invention relates to a method that comprises using a digital printing system to post-print single or multiple color graphics and/or text on paper bags. It is an object of the present invention for the method to comprise taking paper pinch bottom bags already separately produced on a bag machine and feeding the bags to a separate digital printing system. It is an object of the present invention for the method to comprise taking paper flat bottom bags already separately produced on a bag machine and feeding the bags to a separate digital printing system. It is an object of the present invention for the method to comprise taking paper pinch bottom bags already separately produced on a bag machine and post-printing on the bags by using a separate digital printing system. It is an object of the present invention for the method to comprise taking paper flat bottom bags already separately produced on a bag machine and post-printing on the bags by using a separate digital printing system. It is an object of the present invention for the method to comprise the digital printing system depositing ink or toner onto the bag surface to form an image. It is an object of the present invention for the ink or toner to form a thin layer on the surface of the bag. It is an object of the present invention for the ink or toner to be adhered to the bag by using a fuser fluid. It is an object of the present invention for the ink or toner to be adhered to the bag by using heat. It is an object of the present invention for the ink or toner to be adhered to the bag by using UV curing. It is an object of the present invention for the ink or toner to be adhered to the bag by using some combination of fuser fluid, heat, or UV curing.

The present invention relates to a method that comprises using a digital printing system with an integrated feed to post-print single or multiple color graphics and/or text on paper bags. It is an object of the present invention for the method to comprise automatically flowing previously produced paper pinch bottom bags through an integrated feed mechanism on an attached digital printing system to digitally print the bags. It is an object of the present invention for the method to comprise automatically flowing previously produced paper flat bottom bags through an integrated feed mechanism on an attached digital printing system to digitally print the bags. It is an object of the present invention to place bags to be printed in a storage unit such as a drawer or tray connected to the digital printing system. It is an object of the present invention that the bags to be printed be automatically withdrawn from the storage unit and fed to the digital printing system. It is an object of the present invention that the bags to be printed are fed individually to the digital printing system via a conveyor belt or similar transporting system. It is an object of the present invention that the bags to be printed are fed to the digital printing system through an automatic feeding system. It is an object of the present invention that the automatic feeding system be located on top of the digital printing system. It is an object of the present invention for a digital printing system to deposit ink or toner onto the bag surface to form an image. It is an object of the present invention for the ink or toner to form a thin layer on the surface of the bag. It is an object of the present invention for the ink or toner to be adhered to the bag by using a fuser fluid. It is an object of the present invention for the ink or toner to be adhered to the bag by using heat. It is an object of the present invention for the ink or toner to be adhered to the bag by using UV curing. It is an object of the present invention for the ink or toner to be adhered to the bag by using some combination of fuser fluid, heat or UV curing.

The present invention relates to a method for digitally printing on flexible and semi-rigid polyethylene packaging materials including such materials as polyethylene film, sheets, tubing and bags. It is an object of the present invention to digitally print on flexible and semi-rigid polyethylene products such as plastic t-sacks, sheeting, tubing, bags, covers such as furniture covers and dust covers, and storage bags such as mattress bags and food pouches. It is an object of the present invention for any of these products to have an antimicrobial component added to it.

The present invention relates to a method for using a digital printing system, separate from a bag machine, to pre-print single or multiple color graphics and/or text on sheets or rolls of polyethylene film used to make products such as bags, t-sacks and pouches. It is an object of the present invention for the method to comprise using a digital printing system, separate from a bag machine, to deposit ink or toner onto the surface of the polyethylene sheets or rolls to form an image (pre-printing) before converting the polyethylene material to a product such as bags. It is an object of the present invention for the ink or toner to form a thin layer on the surface of the polyethylene material. It is an object of the present invention for the ink or toner to be adhered to the bag by using a fuser fluid. It is an object of the present invention for the ink or toner to be adhered to the product by using heat. It is an object of the present invention for the ink or toner to be adhered to the product by using UV curing. It is an object of the present invention for the ink or toner to be adhered to the product by using fuser fluid, heat, UV curing or any combination. It is an object of the present invention for the digital printing system to print continuously on the polyethylene material. It is an object of the present invention for the digital printing system to print repeated images of the graphics and/or text on the polyethylene material. It is an object of the present invention for the digital printing system to print graphics and/or text on the polyethylene so that when the polyethylene material is formed into products such as bags, the image or text is in the same location on every product produced. It is an object of the present invention for the digital printing system to print graphics and/or text on the polyethylene in different locations on the product.

The present invention relates to a method for using a digital printing system to post-print single or multiple color graphics and/or text on polyethylene products such as bags. It is an object of the present invention for the method to comprise taking polyethylene bags already separately produced on a bag machine and feeding the bags to a separate digital printing system. It is an object of the present invention for the method to comprise taking polyethylene bags already separately produced on a bag machine and post-printing on the bags by using a separate digital printing system. It is an object of the present invention for the method to comprise the digital printing system depositing ink or toner onto the bag surface to form an image. It is an object of the present invention for the ink or toner to form a thin layer on the surface of the bag. It is an object of the present invention for the ink or toner to be adhered to the bag by using a fuser fluid. It is an object of the present invention for the ink or toner to be adhered to the bag by using heat. It is an object of the present invention for the ink or toner to be adhered to the bag by using UV curing. It is an object of the present invention for the ink or toner to be adhered to the bag by using some combination of fuser fluid, heat, or UV curing.

The present invention comprises a method to use a digital printing system with an integrated feed to post-print single or multiple color graphics and/or text on polyethylene products such as bags. It is an object of the present invention for the method to comprise automatically flowing previously produced polyethylene products such as bags through an integrated feed mechanism on an attached digital printing system to digitally print the bags. It is an object of the present invention to place bags to be printed in a storage unit such as a drawer or tray connected to the digital printing system. It is an object of the present invention that the bags to be printed be automatically withdrawn from the storage unit and fed to the digital printing system. It is an object of the present invention that the bags to be printed are fed individually to the digital printing system via a conveyor belt or similar transporting system. It is an object of the present invention that the bags to be printed are fed to the digital printing system through an automatic feeding system. It is an object of the present invention for the automatic feeding system to be located on top of the digital printing system. It is an object of the present invention for the method to comprise a digital printing system depositing ink or toner onto the bag surface to form an image. It is an object of the present invention for the ink or toner to form a thin layer on the surface of the bag. It is an object of the present invention for the ink or toner to be adhered to the bag by using a fuser fluid. It is an object of the present invention for the ink or toner to be adhered to the bag by using heat. It is an object of the present invention for the ink or toner to be adhered to the bag by using UV curing. It is an object of the present invention for the ink or toner to be adhered to the bag by using some combination of fuser fluid, heat, or UV curing.

### Brief Description of Drawings

Figure 1 is a digital printing system for deposition and fusing of ink or toner to a bag delivered from a reservoir with an integrated drive mechanism to deliver individual bags to the digital printing system and an integrated drive mechanism to receive and stack printed bags.
Figure 2 is large format digital printing system for deposition and fusing of ink or toner onto a substrate fed from a roll via a drive mechanism and wound onto a roll after printing by an integrated drive mechanism.
Figure 3 is a bag machine connected to a digital printing system with an integrated drive mechanism to be used in conjunction with the digital printing system, having a motor, transmission, and gripping apparatus to transmit bags to be printed upon to the digital printing system.
Figure 4 is a bag machine connected to a digital printing system with an integrated drive mechanism to be used in conjunction with the digital printing system, having a motor, transmission, and gripping apparatus to receive and stack printed bags.
Figure 5 is a digital printing system connected to a bag machine.

### Detailed Description of the Drawings

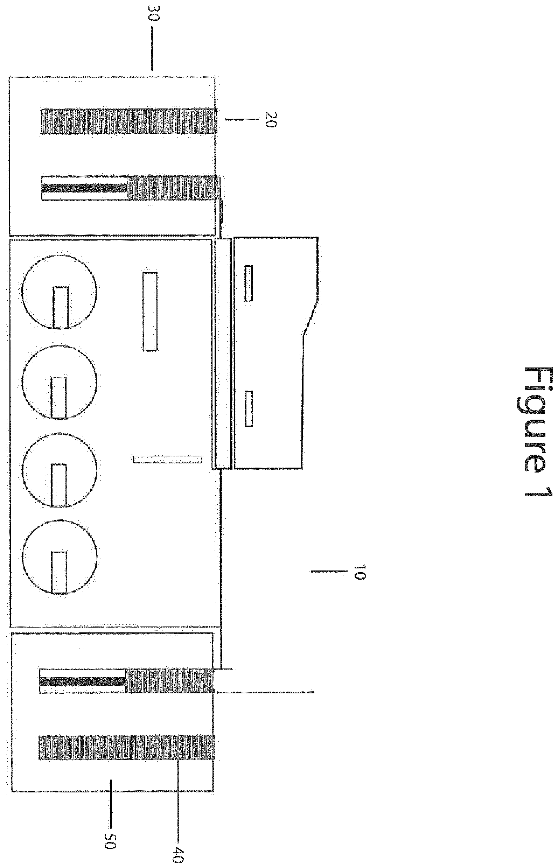

Figure 1 shows digital printing system 10 for deposition and fusing of ink or toner to a blank bag 20 delivered from a reservoir 30 with an integrated drive mechanism (not pictured) to deliver individual bags 20 to the digital printing system 10 and an integrated drive mechanism (not pictured) to receive and stack bags that have been printed on 40 in a reservoir 50.

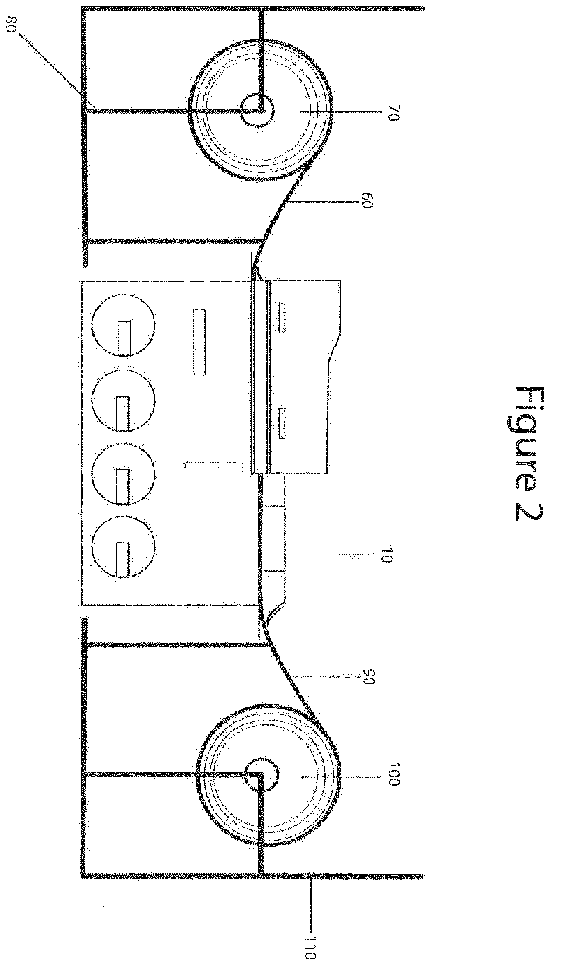

Figure 2 shows substrate 60 being unwound from a roll 70 via an unwinder 80 and fed to a digital printing system 10 for deposition and fusing of ink or toner onto the substrate 60. The printed substrate 90 is wound on a roll 100 via a winder 110.

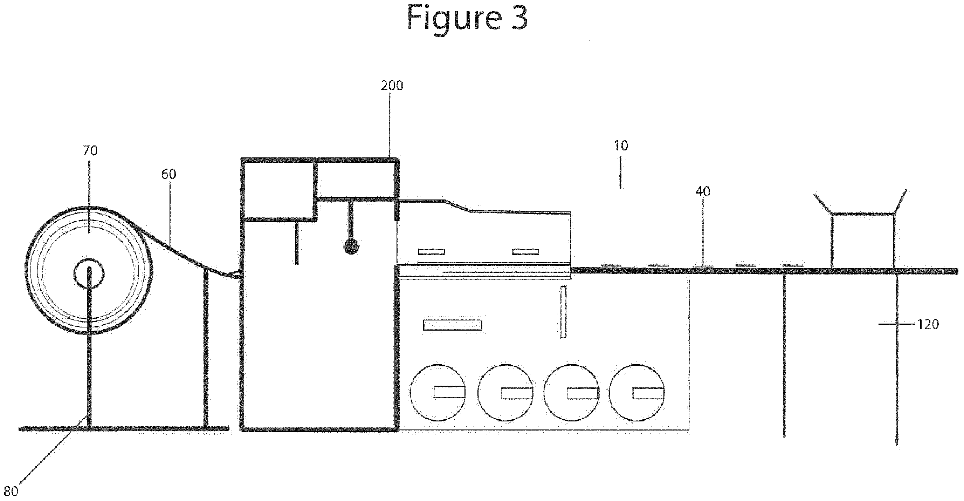

Figure 3 shows substrate 60 being unwound from a roll 70 via an unwinder 80 and fed to a bag machine 200 for forming the substrate 60 into a bag which is then fed into a digital printing system 10 via an integrated drive mechanism (not pictured) to deliver individual bags. Printed bags 40 are received individually on a table 120 for packing.

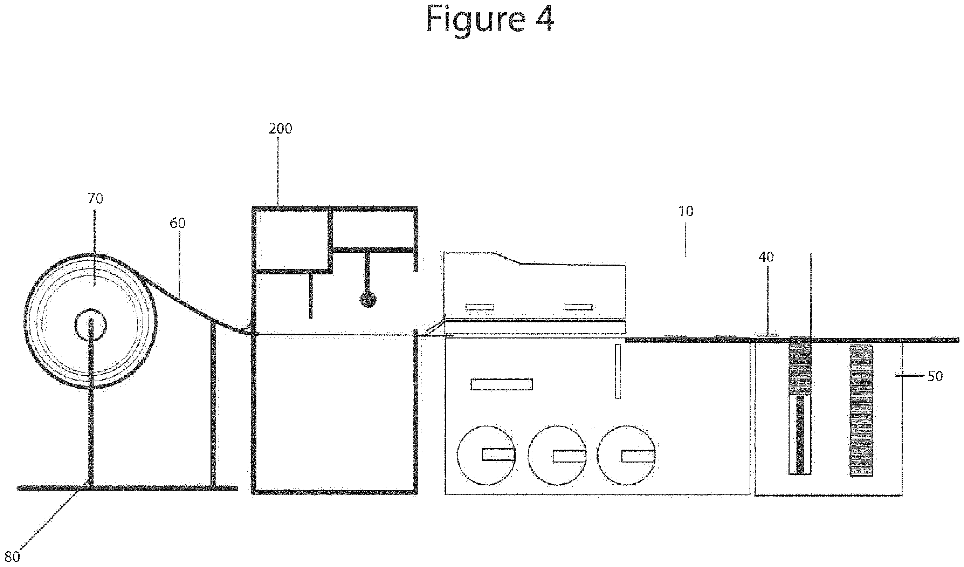

Figure 4 shows substrate 60 being unwound from a roll 70 via an unwinder 80 and fed to a bag machine 200 for forming the substrate 60 into a bag which is then fed into a digital printing system 10 via an integrated drive mechanism (not pictured) to deliver individual bags to the digital printing system 10 and an integrated drive mechanism (not pictured) to receive and stack printed bags 40 in a reservoir 50.

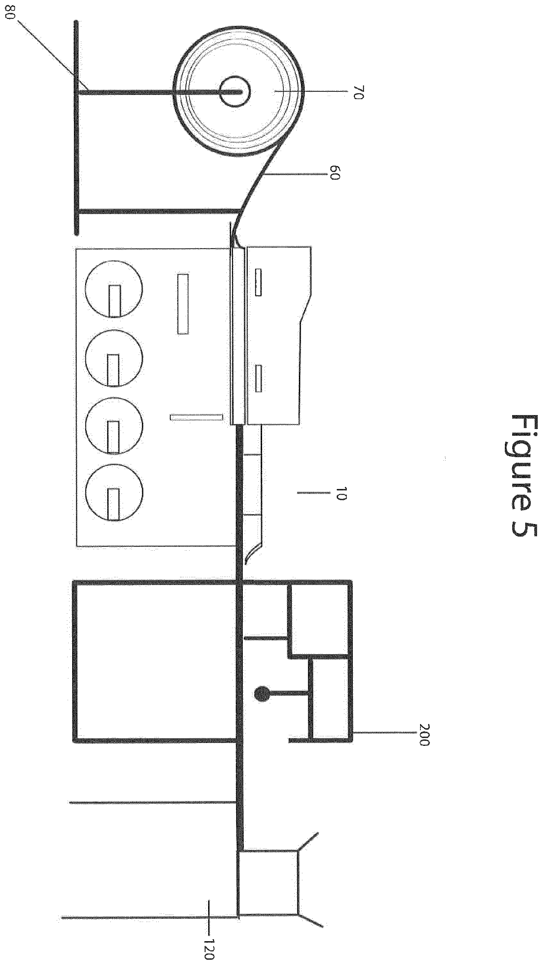

Figure 5 shows substrate 60 being unwound from a roll 70 via an unwinder 80 and fed to a digital printing system 10 for deposition and fusing of ink or toner onto the substrate 60. Substrate 60 with printing is then fed to a bag machine 200 via an integrated device mechanism (not pictured) to deliver substrate sheet to the bag machine. Printed bags from the bag machine 200 are received on a table 120 for packing.

## Claims

1. A method for printing black and white or color graphics and/or text on pinch bottom or flat bottom bags through use of a digital printing system comprising:
manually transferring pinch bottom or flat bottom bags produced on a bag machine to a feed system of a digital printing system separate from said bag machine;
depositing a thin layer of ink or toner onto a bag surface to form an image;
adhering said ink or toner to said bag surface by use of a fuser fluid, heat, UV curing process, or any combination.

2. A method for printing black and white or color graphics and/or text on rolls of bag material used to make pinch bottom or flat bottom bags through use of a digital printing system comprising:
unrolling a length of bag material from a continuous roll of bag material;
depositing ink or toner onto surface of said bag material to form an image in a continuous manner as additional lengths of said bag material are unrolled;
adhering said ink or toner to said surface of said bag material by use of a fuser fluid, heat, UV curing, or any combination;
adjusting ink or toner deposition on locations of said bag material.

3. A method for printing black and white or color graphics and/or text on pinch bottom or flat bottom bags through use of a digital printing system comprising:
transferring pinch bottom or flat bottom bags produced on a bag machine and feeding said pinch bottom or flat bottom bags to an attached digital printing system;
storing in a storage drawer connected to said digital printing machine said pinch bottom or flat bottom bags to be printed on;
automatically withdrawing from said storage drawer and feeding to said digital printing system said bags to be printed on;
feeding said bags to be printed on to said digital printing system individually via a conveyor belt or through an automatic feeding system to said digital printing system;
depositing a thin layer of ink or toner onto a surface of said bag to form an image;
adhering of ink or toner to said surface of said bag by use of a fuser fluid, heat, UV curing or any combination.

4. A method for digital printing of single or multiple color graphics and/or text on flexible and semi-rigid packaging materials comprising:
manually transferring said packaging materials produced on a packaging machine to a feed system of a digital printing system separate from said packaging machine;
depositing a thin layer of ink or toner onto said packaging material surface to form an image;
adhering said ink or toner to said packaging material surface by use of a fuser liquid, heat, UV curing process, or any combination;
wherein said packaging materials comprise paper or polyethylene.

5. The method of claim 4 wherein said packaging material is printed on before converting said packaging material into finished products.

6. The method of claim 4 wherein said packaging material is converted to a finished product before digitally printing on said packaging material.

7. A method of using a digital printing system separate from a packaging machine to pre-print single or multiple color graphics and/or text on rolls of packaging material comprising:
pre-printing on rolls of said packaging material by a digital printing system separate from said packaging machine prior to feeding said packaging material to said packaging machine for producing packaging;
depositing ink or toner onto surface of said packaging material to form an image before converting said packaging material to packaging;
forming a thin layer with said ink or toner on said surface of said packaging material;
adhering said ink or toner to said packaging material by using fuser fluid, heat, UV curing, or a combination of same.

8. The method of claim 7 wherein said packaging material is fed from a roll via a drive mechanism.

9. The method of claim 8 wherein said packaging material is wound on a roll after printing by an integrated drive mechanism that comprises a motor, transmission, and gripping apparatus.

10. The method of claim 7 wherein said digital printing system prints continuously on said packaging material as it is unrolled and fed to a packaging machine.

11. The method of claim 7 wherein said digital printing system prints repeated images of said graphics and/or text on said packaging material.

12. A method of post printing using a digital printing system for single or multiple color graphics and/or text on bags comprising:
taking bags already separately produced on a bag machine and feeding said bags to a separate digital printing system;
post-printing on said bags using said separate digital printing system;
depositing ink or toner onto said bag surface to form an image;
said ink or toner forming a thin layer on said surface of said bag;
adhering said ink or toner to said bag by using a fuser fluid, heat, UV curing, or combination of same.

13. A method for post-printing on bags with a digital printing system comprising:
placing said bags to be printed in a storage unit such as a drawer or tray connected to said digitally printing system;
automatically withdrawing bags to be printed from said storage unit;
automatically flowing previously produced bags through an integrated feed mechanism on an attached digital printing system to digitally print said bags;
said integrated feed system comprising a conveyor belt or similar transporting system;
depositing ink or toner onto surface of said bag to form an image; forming a thin layer of ink or toner on said surface of said bag;
adhering said ink or toner to said bag by using fuser fluid, heat, UV curing, or combination of same.

14. A method for digitally pre-printing single or multiple color graphics and/or text on sheets or rolls of polyethylene film comprising:
depositing ink or toner onto surface of said polyethylene sheets or rolls;
forming an image on said film before converting said polyethylene film to products such as a bag;
forming a thin layer of ink or toner on said surface of said polyethylene film;
adhering said ink or toner to said polyethylene film by using fuser fluid, heat, curing or combination of same.

15. The method of claim 14 further comprising:
printing continuously on said polyethylene film.

16. The method of claim 15 further comprising:
printing repeated images of said graphics and/or text on said polyethylene film.

17. A method for digital post printing single or multiple color graphics and/or text on polyethylene products such as bags comprising:
taking polyethylene products already separately produced on a machine and feeding said polyethylene products to a separate digital printing system;
post-printing on said polyethylene products using a separate digital printing system;
depositing ink or toner onto surface of said polyethylene products to form an image;
forming a thin layer of ink or toner on said polyethylene product surface; adhering said ink or toner to said polyethylene product by using a fuser fluid, heat, UV curing, or combination of same.

18. A method for using a digital printing system to post print single or multiple color graphics and/or text on polyethylene products comprising:
placing said polyethylene products to be printed on in a storage unit such as a drawer or tray connected to said digital printing system;
automatically withdrawing from said storage unit said polyethylene products;
automatically flowing previously produced polyethylene products through an integrated feed mechanism on an attached digital printing system to digitally print said polyethylene product;
said feed mechanism comprising a conveyor belt or similar transporting system;
depositing ink or toner onto surface of said polyethylene product to form an image;
forming a thin layer of ink or toner on said surface of said polyethylene product;
adhering ink or toner to said polyethylene product by using fuser fluid, heat, UV curing, or combination.

19. The method of claim 18 further comprising: receiving and stacking said printed polyethylene products by using an integrated drive mechanism.

20. The method of claim 19 wherein said drive mechanism comprises a motor, transmission, and gripping apparatus to receive and stack said printed polyethylene products.

21. The method of claim 14 wherein said polyethylene film is unwound from a roll via an unwinder and fed to a bag machine for forming said polyethylene film into a bag which is then fed into a digital printing system via integrated drive mechanism to deliver individual bags to said digital printing system and an integrated drive mechanism to receive and stack printed bags in a reservoir.
